(19) Europäisches Patentamt
European Patent Office
Office européen des brevets

(11) Veröffentlichungsnummer: **0 290 881 B1**

(12) # EUROPÄISCHE PATENTSCHRIFT

(45) Veröffentlichungstag der Patentschrift: **15.07.92**

(51) Int. Cl.$^5$: **C08K 7/28**, C08J 9/06, C08L 63/00, C08J 9/32

(21) Anmeldenummer: **88106864.7**

(22) Anmeldetag: **29.04.88**

(54) **Verfahren zur Herstellung von Leichtbauelementen.**

(30) Priorität: **09.05.87 DE 3715487**

(43) Veröffentlichungstag der Anmeldung:
**17.11.88 Patentblatt 88/46**

(45) Bekanntmachung des Hinweises auf die Patenterteilung:
**15.07.92 Patentblatt 92/29**

(84) Benannte Vertragsstaaten:
**AT BE CH DE ES FR GB GR IT LI LU NL SE**

(56) Entgegenhaltungen:
**DE-A- 1 570 925**
**DE-A- 2 124 961**
**DE-A- 3 402 424**
**US-A- 3 056 184**
**US-A- 3 174 870**
**US-A- 3 562 190**

(73) Patentinhaber: **STO AKTIENGESELLSCHAFT**
**W-7894 Stühlingen(DE)**

(72) Erfinder: **Kubbutat, Albert F.**
**Buhmayerstrasse 13**
**W-8886 Wittislingen(DE)**

(74) Vertreter: **Charrier, Rolf, Dipl.-Ing.**
**Postfach 260 Rehlingenstrasse 8**
**W-8900 Augsburg 31(DE)**

EP 0 290 881 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von Leichtbauelementen nach dem Oberbegriff des Anspruches 1.

### Stand der Technik

Die EP-A 00 66 172 beschreibt Leichtbauelemente, die u.a. aus geblähten Mineralstoffen und einem Bindemittel bestehen. Das Bindemittel wird in geschäumter Form verarbeitet, wobei das Aufschäumen mittels eines oberflächenaktiven Mittels erfolgt, z.B. mittels Seife. Das Aufschäumen erfolgt in Anwesenheit von Wasser, so daß das Bindemittel in Wasser dispergierbar oder zumindest in Wasser emulgierbar sein muß. Als Bindemittel sind u.a. Epoxidharze genannt. Die Anwesenheit von Wasser bei der Herstellung der Leichtbauelemente ist jedoch unerwünscht, da unvermeidbar ein Teil des Wassers im Leichtbauelement eingeschlossen bleibt.

Die US-A 35 85 157 beschreibt Bauelemente, die aus einem Bindemittel, z.B. Epoxidharz, kleinen Glaskugeln und dazu größeren Kugeln aus expandiertem Polystyrene bestehen. Nachteilig ist hierbei der erforderliche hohe Bindemittelanteil und die Brennbarkeit des Produkts.

In der Zeitschrift "Kunststoff-Berater 8/1972, Seiten 613 bis 618 wird die Herstellung von Bauteilen aus einer Harz-Schaumglaspaste beschrieben, die Glasfasern und feine Glasperlen enthält. Auch hier ist der Harzanteil relativ hoch.

Das Material nach der DE-A 26 51 699 besteht aus feinen zellhaltigen Glasperlen, größeren zellfreien Glasperlen und einem Bindemittel z.B. Epoxidharz. Das Material ist schwierig herzustellen und weist einen hohen Bindemittelanteil auf.

Die Leichtbauplatten nach dem DE-U 19 18 406 besteht aus geblähten Mineralstoffen und einem im geschäumten Zustand härtenden Bindemittel, z.B. Wasserglas.

Die Leichtbauelemente, die sich nach der DE-A 16 69 610 ergeben, bestehen aus geblähtem Glas und einem organischen Hartschaum wie beispielsweise Polyurethanschaum. Das geblähte Glas soll eine geschlossene Oberfläche aufweisen. Bei dem Vermischen des geblähten Glases mit dem Polyurethan sollte letzteres vorgeschäumt sein. Auch diese Leichtbauelemente weisen einen hohen Bindemittelanteil auf und haben zudem den Nachteil, daß der Polyurethanschaum brennbar ist.

Das DE-U 19 13 069 beschreibt ein Leichtbauelement,bestehend aus geschäumtem Polyurethan und Schaumglaskügelchen, die ebenfalls eine glasierte Oberfläche aufweisen sollen.

Insbesondere aus den beiden letztgenannten Schriften ergibt sich, daß das Blähglas in erster Linie als Füllstoff für Kunststoffschäume dient. Die Oberfläche der Blähglaskügelchen sollte weitgehend porenfrei sein, da man von der Auffassung ausging, daß die Blähglaskügelchen mit dem Bindemittel getränkt verden würden.

### Beschreibung der Erfindung

Es besteht die Aufgabe, Leichtbauelemente als Platten-oder Profilteile herzustellen, die eine hohe mechanische Festigkeit bei geringer Dichte aufweisen, die unbrennbar sowie schall- und wärmeisolierend sind und die zu ihrer Herstellung einen möglichst geringen Bindemittelanteil benötigen.

Zur Herstellung werden Blähglaskügelchen verwendet, die an ihrer Oberfläche offene, im Innern jedoch geschlossene Poren aufweisen. Diese werden bevorzugt aus Altglas hergestellt, das zu Mehl zerkleinert wird. Dieses Mehl wird mit mineralischen Zuschlagstoffen und Wasserglas versetzt und in einem Ofen sehr hohen Temperaturen ausgesetzt. Hierbei bilden sich die vorerwähnten Blähglaskügelchen. Das Blähglas weist folgende Kornfraktionen in mm, Schüttdichten A in $Kg/m^3$ und Rohdichten B in $g/cm^3$ auf:

| Fraktion | A | B |
|---|---|---|
| 10 - 20 | 150 ± 25 | 0.20-0.30 |
| 4 - 10 | 175 ± 25 | 0.25-0.35 |
| 2 - 4 | 200 ± 25 | 0.30-0.40 |
| 1 - 2 | 225 ± 25 | 0.35-0.45 |
| 0.5 - 1 | 275 ± 25 | 0.40-0.50 |
| 0.2 - 0.5 | 375 ± 25 | 0.45-0.55 |

Verwendet werden weiterhin ein Epoxidbindemittel und ein Polysiloxan mit Si-H-Bindungen. Das Epoxidbindemittel besteht aus zwei Komponenten und zwar aus einem Bisphenol-A-Harz als erster Komponente z.B. LY 5054 der Ciba-Geigy, und als zweite Komponente aus einem primären Amin als Aminhärter, beispielsweise HY 5054 der Ciba-Geigy. Das Polysiloxan mit Si-H-Bindungen stellt ein Treibmittel dar, welches der ersten Komponente beigemischt ist.

Die Blähglaskugeln, das mit dem Polysiloxan vermischte Bisphenolharz und der Aminhärter werden in einen Mischer gegeben und hierbei homogenisiert. Dabei werden die Blähglaskugeln an ihrer Oberfläche mit dem Harz, dem Härter und dem Siloxan benetzt. Diese Flüssigkeiten dringen jedoch nicht in die Poren an der Oberfläche der Blähglaskügelchen ein.

Nach dem Abfüllen einer Form, die der Form des herzustellenden Leichtbauelements entspricht wird Wärme zugeführt. Hierbei treten zwei Reaktionen auf, nämlich die Freisetzung des Treibgases Wasserstoff aus dem Treibmittel, nachstehend die Reaktion I und darauffolgend die Härtungsreaktion, nachfolgend Reaktion II genannt.

**Reaktion I:**

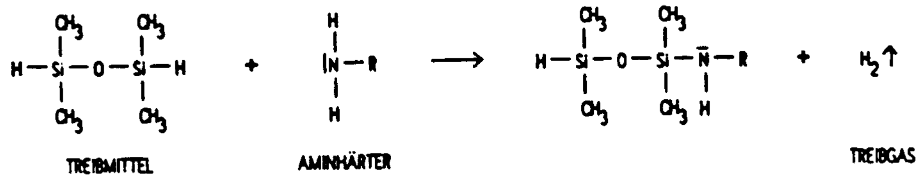


**Reaktion II:**

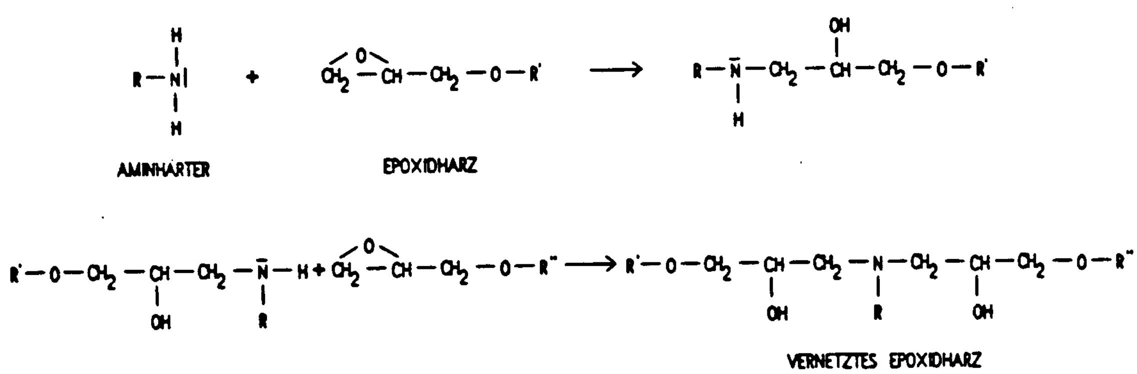


Hierbei wird das vernetzte Epoxidharz aufgeschäumt und füllt die Hohlräume zwischen den Blähstoffkügelchen aus, ohne in die Poren der Blähglasoberfläche einzudringen, was durch den Expansionsdruck beim Entstehen des Treibgases verhindert wird. Dies steht im Gegensatz zu einem nichtschäumenden Flüssigharzsystem, bei welchem ein Teil des Matrixmaterials von den Blähglaskügelchen aufgesaugt wird und dieser Teil damit nicht zum Binden der Kügelchen beiträgt, und bei dem die Verbinding zwischen den Blähglaskügelchen punktförmig erfolgt. Durch das Aufschäumen werden die Blähglaskügelchen ganz vom Schaum umschlossen und die Krafteinleitung erfolgt im Belastungsfall über die gesamte Kugeloberfläche und nicht über einzelne Punkte. Gegenüber einem Flüssigharzsystem ohne Aufschäumen ergeben sich die Vorteile eines geringeren Bindemittelanteils bei höherer Festigkeit des Endprodukts.

## Ausführungsbeispiele

Bevorzugt werden für 100 Gewichtsteile Harz 40 Gewichtsteile Härter verwendet.

Die Grundfraktionen des Blähglases betragen zu gleichen Teilen 0,2 bis 0,5 mm und 0,5 bis 1 mm. Je nach Dicke des Leichtbauelements werden die gröberen Fraktionen beigegeben. Sollen Bauteile mit guten Dämmeigenschaften hergestellt werden, dann überwiegen die Grobfraktionen, wobei der Anteil des Epoxidbindemittels an der Untergrenze des im Anspruch 1 angegebenen Bereichs liegen kann. Sollen Profilteile hergestellt werden, dann werden überwiegend Blähglaskugeln der Feinfraktion verwendet, wobei der Anteil des Epoxidbindemittels an der in Anspruch 1 angegebenen Obergrenze liegt, jedoch wie später erläutert noch vermindert werden kann.

Die Wärmezufuhr erfolgt bei etwa 100 °C über eine Dauer von etwa 10 Minuten. Bevorzugt wird gleichzeitig ein Druck von 0,5 $N/mm^2$ erzeugt. Um bei der Herstellung von Profilteilen den an der angegebenen Obergrenze liegenden Anteil des Epoxidbindemittels zu vermindern, wird dieser Druck bis zu 1$N/mm^2$ erhöht, so daß ein Bindemittelanteil benötigt wird, der 40 % unter der in Anspruch 1 angegebenen Obergrenze liegt. Beim Mischen der Blähglaskugeln mit dem Harz, dem Härter und dem Siloxan kann zusätzlich eine oberflächenaktive Substanz auf Silikonbasis beigegeben werden. Zur Erhöhung der flammhemmenden Wirkung ist es weiterhin möglich, mineralische Füllstoffe auf Calciumcarbonat-, Aluminiumhydroxid-, Aluminiumsilikat- oder Quarzbasis beizugeben. Wegen der hohen spezifischen Oberfläche dieser mineralischen Füllstoffe wird dann allerdings ein Expoxidbindemittelanteil benötigt, der an der Obergrenze des in Anspruch 1 angegebenen Bereichs liegt.

Es ist weiterhin möglich, zur Mischung Mineral-, Glas-oder Kunststoffasern ab 3 mm Länge beizugeben, die zur mechanischen Festigkeit beitragen, da sie in den Kunststoffschaum eingebettet werden.

Es werden 70 - 95 Gewichtsteile offenporige Blähglaskugeln der Kornfraktion 0,2 bis 20 mm und einer Rohdichte zwischen 0,2 und 0,55 $g/cm^3$ verwendet. Diese werden mit 4 - 30 Gewichtsteilen eines Epoxidbindemittels vermischt, bestehend aus Bisphenolharz und einem Aminhärter, wobei dem Bisphenolharz 0,5 - 5 Gewichtsteile eines Polysiloxans beigemischt sind. Das Verhältnis von Harz zu Härter beträgt etwa 100 : 40. Die Beigabe einer oberflächenaktiven Substanz auf Silikonbasis beträgt bis zu 1 Gewichtsteil. Mineralische Füllstoffe können bis zu 100 Gewichtsteilen und Fasern bis zu 10 Gewichtsteilen beigegeben werden.

Zur Herstellung einer Trägerplatte werden beispielsweise 1000 Gewichtsteile Blähglaskugeln, 197 Gewichtsteile Harz, 3 Gewichtsteile Siloxan, 80 Gewichtsteile Aminhärter, 500 Gewichtsteile Aluminiumhydroxid und 20 Gewichtsteile Glasfasern verwendet. Diese werden in einem Zwangsmischer homogenisiert und anschließend bei 100 °C und einem Druck von 0,5 $N/mm^2$ etwa 10 Minuten zu einer Trägerplatte verpreßt.

Werden nach dem Verfahren Platten hergestellt, dann können diese je nach Anwendungszweck mit dünnen Dekor-Schichten aus Glasgewebe, Naturstein, Aluminiumfolie oder -blech, Glas oder Kunststoff in Form von dünnen Platten oder Folien beschichtet werden.

## Patentansprüche

**1.** Verfahren zur Herstellung von Leichtbauelementen unter Verwendung von Blähglaskugeln und einem geschäumten organischen Bindemittel, bei welchem die Blähglaskugeln mit dem Bindemittel gemischt werden, das aufschäumt und aushärtet und dabei eine Matrix bildet, wobei

a) 70-95 Gewichtsteile offenporige Blähglaskugeln der Kornfraktion von 0,2 bis 20 mm und einer Rohdichte zwischen 0,2 und 0,55 $g/cm^3$ verwendet werden,

b) 4-30 Gewichtsteile eines Epoxidbindemittels, bestehend aus Bisphenolharz und einem primären Amin als Aminhärter sowie

c) 0,5-5 Gewichtsteile eines Polysiloxans mit Si-H-Bindungen in flüssiger Form mit den Blähglaskugeln zur Benetzung der Oberfläche der Blähglaskugeln vermischt werden, diese in eine der Form

des Leichtbauelements entsprechende Matrize abgefüllt werden und sodann durch Wärmezufuhr eine Reaktion des Aminhärters mit dem Polysiloxan und mit dem Epoxidharz bewirkt wird zur Bildung einer Schaumstruktur des Bindemittels in den Zwischenräumen zwischen den Blähglaskugeln, die von diesem Schaum umhüllt sind.

**2.** Verfahren nach Anspruch 1, dadurch **gekennzeichnet,** daß zur Mischung bis zu einem Gewichtsteil einer oberflächenaktiven Substanz auf Silikonbasis beigegeben wird.

**3.** Verfahren nach Anspruch 1, dadurch **gekennzeichnet,** daß zur Mischung bis zu 100 Gewichtsteile eines mineralischen Füllstoffs auf Calciumcarbonat-Aluminiumhydroxid-, Aluminiumsilikat- oder Quarzbasis einzeln oder in Mischung beigegeben werden.

**4.** Verfahren nach Anspruch 1, dadurch **gekennzeichnet,** daß zur Mischung bis zu 10 Gewichtsteile Mineral-, Glas- oder Kunststoffasern ab 3 mm Länge einzeln oder in Mischung beigegeben werden.

**5.** Verfahren nach Anspruch 1, dadurch **gekennzeichnet,** daß die Wärmezufuhr bei etwa 100 °C über etwa 10 Minuten erfolgt.

**6.** Verfahren nach Anspruch 1, dadurch **gekennzeichnet,** daß bei der Wärmezufuhr gleichzeitig ein Druck bis zu etwa 1N/mm$^2$ erzeugt wird.

**7.** Verfahren nach einem der Ansprüche 1 bis 6, dadurch **gekennzeichnet,** daß zur Herstellung von Platten mit guten Dämmeigenschaften überwiegend Blähglaskugeln der Grobfraktion und ein an der Untergrenze liegender Anteil des Epoxidbindemittels und zur Herstellung von Profilteilen überwiegend Blähglaskugeln der Feinfraktion und ein an der Obergrenze liegender Anteil des Epoxidbindemittels verwendet werden.

**8.** Verfahren nach einem der Ansprüche 1 bis 7, dadurch **gekennzeichnet,** daß Platten hergestellt werden, die auf mindestens einer Seite mit einer Dekorschicht versehen werden.

**9.** Verfahren nach Anspruch 8, dadurch **gekennzeichnet,** daß die Dekorschicht aus Glasgewebe, Natursein, Aluminiumfolie oder -blech, Glas oder Kunststoff in Form einer dünnen Platte oder Folie besteht.

## Claims

**1.** A process for the production of light-weight construction elements using blown glass balls and a foamed, organic bonding agent, wherein the blown glass balls are mixed with the bonding agent, which foams and hardens and thus forms a matrix, wherein

a) 70 - 95 parts by weight of open-pored blown glass balls in a size fraction of 0.2 to 20 mm and with a gross density of between 0.2 and 0.55 g/cm$^3$ are used,

b) 4 - 30 parts by weight of an epoxide bonding agent, composed of bisphenol resin and a primary amine as amine hardener and

c) 0.5 - 5 parts by weight of a polysiloxane with Si-H bonds in liquid form are mixed with the blown glass balls to wet the surface of the blown glass balls, these are introduced into a mould corresponding to the shape of the light-weight construction element and then, by the supply of heat, a reaction of the amine hardener with the polysiloxane and with the epoxide resin is produced in order to form a foam structure of the bonding agent in the interspaces between the blown glass balls which are enveloped by this foam.

**2.** A process as claimed in Claim 1, characterised in that up to one part by weight of a surface-active substance based on silicon is added to the mixture.

**3.** A process as claimed in Claim 1, characterised in that up to 100 parts by weight of a mineral filler based on calcium carbonate, aluminium hydroxide, aluminium silicate or quartz are added to the mixture either individually or in mixed form.

**4.** A process as claimed in Claim 1, characterised in that up to 10 parts by weight of mineral-, glass- or plastics fibres in lengths from 3 mm are added to the mixture either individually or in mixed form.

5. A process as claimed in Claim 1, characterised in that the supply of heat takes place at a temperature of approximately 100 ° C for approximately 10 minutes.

6. A process as claimed in Claim 1, characterised in that simultaneously to the supply of heat, a pressure of up to approximately $1N/mm^2$ is produced.

7. A process as claimed in one of Claims 1 to 6, characterised in that for the production of plates with good insulating properties, predominantly blown glass balls of the coarse size fraction and a proportion of the epoxide bonding agent at the lower limit are used, and for the production of profiled components predominantly blown glass balls of the fine size fraction and a proportion of the epoxide bonding agent at the upper limit are used.

8. A process as claimed in one of Claims 1 to 7, characterised in that plates are produced which are provided on at least one side with a decorative coating.

9. A process as claimed in Claim 8, characterised in that the decorative coating is composed of glass fabric, stone, aluminium foil or sheet, glass or plastics in the form of a thin plate or foil.

**Revendications**

1. Procédé de fabrication d'éléments de construction légère en utilisant des billes de verre mousse et un liant organique expansé, dans lequel les billes de verre mousse sont mélangées au liant qui est expansé et durci et forme ainsi une matrice, dans lequel
   a) on utilise 70 à 95 parties en poids de billes de verre mousse à pores ouverts de la fraction granulométrique de 0,2 à 20 mm et ayant une densité brute comprise entre 0,2 et 0,55 $g/cm^3$,
   b) on mélange aux billes de verre mousse 4 à 30 parties en poids d'un liant d'époxyde constitué d'une résine au bisphénol et d'une amine primaire comme durcisseur aminé, ainsi que
   c) 0,5 à 5 parties en poids d'un polysiloxane présentant des liaisons Si-H sous forme liquide pour le mouillage de la surface des billes de verre mousse, on verse celles-ci dans une matrice correspondant à la forme de l'élément de construction légère, puis on effectue par apport de chaleur une réaction entre le durcisseur aminé et le polysiloxane et avec la résine époxyde pour la formation d'une structure expansée du liant dans les espaces intermédiaires entre les billes de verre mousse qui sont entourées de ladite mousse.

2. Procédé selon la revendication 1, caractérisé en ce que l'on ajoute au mélange jusqu'à une partie en poids d'une substance tensio-active à base de silicone.

3. Procédé selon la revendication 1, caractérisé en ce que l'on ajoute au mélange jusqu'à 100 parties en poids d'une charge minérale à base de carbonate de calcium, d'hydroxyde d'aluminium, de silicate d'aluminium ou de quartz, isolément ou en mélange.

4. Procédé selon la revendication 1, caractérisé en ce que l'on ajoute au mélange jusqu'à 10 parties en poids de fibres minérales, de fibres de verre ou de fibres en matière plastique à partir d'une longueur de 3 mm, isolément ou en mélange.

5. Procédé selon la revendication 1, caractérisé en ce que l'apport de chaleur s'effectue à 100 ° C environ pendant environ 10 minutes.

6. Procédé selon la revendication 1, caractérisé en ce que, lors de l'apport de chaleur, on exerce simultanément une pression allant jusqu'à environ $1N/mm^2$.

7. Procédé selon l'une des revendications 1 à 6, caractérisé en ce que, pour la fabrication de panneaux ayant de bonnes propriétés isolantes, on utilise principalement des billes de verre mousse de la fraction grossière et une proportion du liant d'époxyde à la limite inférieure et, pour la fabrication de pièces profilées, on utilise principalement des billes de verre mousse de la fraction fine et une proportion du liant d'époxyde à la limite supérieure.

8. Procédé selon l'une des revendications 1 à 7, caractérisé en ce que l'on fabrique des plaques qui sont

munies sur un côté au moins d'une couche décorative.

**9.** Procédé selon la revendication 8, caractérisé en ce que la couche décorative se compose d'un tissu de verre, de pierre naturelle, d'une feuille ou tôle d'aluminium, de verre ou de matière plastique sous la forme d'une plaque mince ou d'une feuille.